(19) **Europäisches Patentamt European Patent Office Office européen des brevets**

(11) **EP 1 675 374 B1**

(12) **EUROPEAN PATENT SPECIFICATION**

(45) Date of publication and mention
of the grant of the patent:
**04.08.2010 Bulletin 2010/31**

(51) Int Cl.:
*H04M 9/08* (2006.01)

(21) Application number: **04447290.0**

(22) Date of filing: **22.12.2004**

(54) **Circuit and method for estimating a room impulse response**

Verfahren und Anordnung für das Schätzen einer Raumimpulsantwort

Procédé et circuit pour l'estimation de la réponse impulsionelle d'une pièce

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**28.06.2006 Bulletin 2006/26**

(73) Proprietor: **Televic NV.**
**8870 Izegem (BE)**

(72) Inventors:
• **Rombouts, Geert**
**9030 Gent (BE)**
• **Verhoeve, Piet**
**8930 Menen (GB)**
• **Struyve, Kris**
**8400 Oostende (BE)**
• **Van Waterschoot, Toon**
**2600 Berchem (BE)**
• **Moonen, Marc**
**3020 Herent (BE)**

(74) Representative: **Van Malderen, Joëlle**
**pronovem - Office Van Malderen**
**Avenue Josse Goffin 158**
**1082 Bruxelles (BE)**

(56) References cited:
**US-B1- 6 611 600**

• **ANN SPRIET: "ADAPTIVE FILTERING TECHNIQUES FOR NOISE REDUCTION AND ACOUSTIC FEEDBACK CANCELLATION IN HEARING AIDS" KATHOLIEKE UNIVERSITEIT LEUVEN, [Online] September 2004 (2004-09), pages 181-252, XP002322183 BELGIUM ISBN: 90-5682-538-0 Retrieved from the Internet: URL: http://www.kuleuven.ac.be/exporl/Lab/P ublications/phd.pdf> [retrieved on 2005-03-23]**

**Description**

**Field of the invention**

The present invention relates to a circuit and method for estimating an acoustic impulse response. It can be applied e.g. to cancel acoustic feedback or acoustic echo or for automatic volume control.

**State of the art**

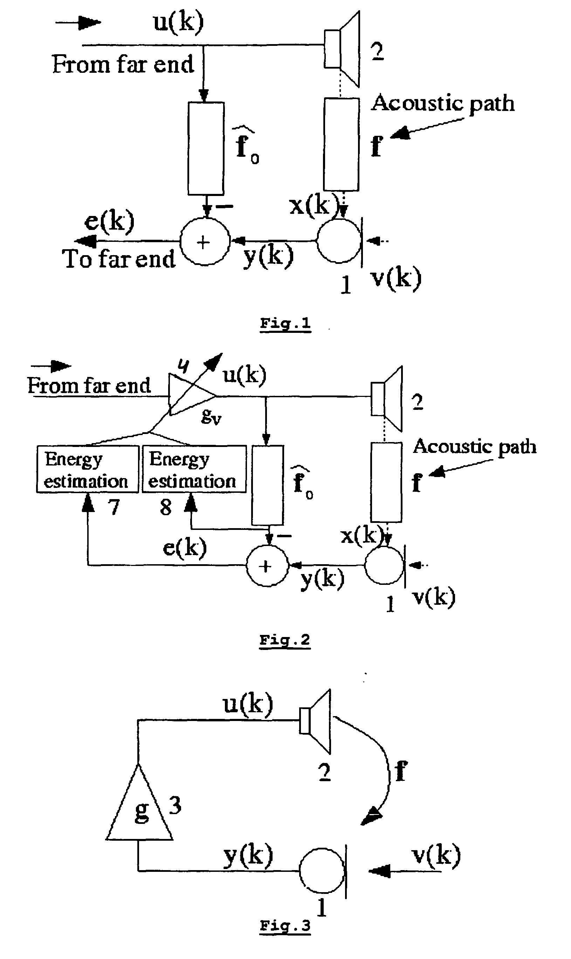

Acoustic echo cancellation (AEC) has been a popular research topic in acoustic signal processing, motivated mainly by the increasing desire for hands-free speech communication such as in e.g. telephony and intercom applications. A classical AEC scenario is shown in Fig. 1. A discretised speech signal $u(k)$ from the far-end side is to be broadcasted in an acoustic enclosure (the 'room') by means of a loudspeaker 2. A microphone 1 is present in the room for recording a local signal $v(k)$ (the near-end signal) which is to be transmitted back to the far-end side. An acoustic echo path exists between the loudspeaker 2 and the microphone 1 such that the (sampled) recorded microphone signal $y(k)=x(k)+v(k)$ contains an undesired echo component x(k) in addition to the near-end signal component $v(k)$. If the echo path impulse response is modelled as a finite impulse response (FIR) filter $F(q,k)$ with coefficient vector f, then the echo component can be regarded as a filtered version of the loudspeaker signal: $x(k)=F(q,k)u(k)$, whereby q denotes the time shift operator, e.g. $q^{-D}u(k)=u(k-D)$. The main objective in AEC is to identify the unknown room impulse response (RIR), $F(q,k)$ and hence to subtract an estimate $\hat{F}_0(q,k)u(k)$ of the echo component from the microphone signal. This way an echo-compensated signal $e(k)=y(k)-\hat{F}_0(q,k)u(k)$ is sent to the far-end side.

Since $F(q,k)$ may be time-varying (e.g. due to people moving around in the room), an adaptive algorithm is usually applied to the RIR estimation. It is a well-known problem in AEC that the performance (variance on the solution) of standard adaptive algorithms (like recursive least squares (RLS), normalised least mean squares (NLMS) or affine projection algorithms (APA)) may decrease severely when near-end noise or near-end speech is present ('double-talk' periods). A large amount of ambient noise and near-end speech results in a large variance on the estimation of the room impulse response. Conventional AEC methods use a double talk detector and switch off adaptation during double talk. In an automatic volume control (AVC) application (as depicted in Fig. 2), estimates of the energy (7) of the near-end signal and estimates of the loudspeaker energy (8) reaching the microphone (1) are used to control the gain of the loudspeaker signal. The AEC and AVC schemes are referred to as open-loop identification.

Acoustic feedback, also referred to as the Larsen-effect (howling), occurs in microphone(1) - amplifier(3) - loudspeaker(2) - room systems (Fig. 3) when the microphone (1) is too close to the loudspeaker 2 and/or when the amplification is too large. In Fig. 3, g denotes the amplifier gain, $y(k)$ the microphone signal, $u(k) = gy(k)$ the loudspeaker signal, f the feedback path impulse response and $v(k)$ the source signal (speech). Acoustic feedback occurs when the loop gain is larger than one at a frequency where the loop phase is a multiple of $2\Pi$. The feedback problem has been studied mainly in a hearing aids context, where the feedback path impulse response is short (less than 5 msec).

In systems where the acoustic impulse response is typically much longer (e.g. 500 msec or more), like in public address (PA) systems, a conventional solution to acoustic feedback cancellation (AFC) consists in inserting notch filters into the signal path, thus decreasing the loop gain at those frequencies for which the problem arises. The main disadvantage is however that such a system is 'reactive', i.e. the howling phenomenon first needs to be detected before the notch filter can be computed and placed in the loop. In most systems, detection takes more than 0.5 second, hence a 'proactive' approach is more desirable. Another disadvantage of the notch filter based systems is that they do not suppress the 'reverb-like' sound, which occurs in a system, which is marginally stable.

Instead of applying notch filters, one could approach AFC by applying direct identification (as in AEC). Wiener filtering theory can then be used in order to estimate the room impulse response with only the loudspeaker signal as an input to the system. However, the correlation between the speech source signal v(k) and the loudspeaker signal u(k) in a closed-loop scheme as in Fig. 2 results in a bias in the identified room impulse response.

The schemes under study are closed-loop identification, as applied in the acoustic feedback cancellation (AFC) schemes (as depicted in Fig.4), and open-loop identification as applied in the acoustic echo cancellation (as depicted in Fig. 5) and volume control (as depicted in Fig 6). The filter coefficient vector **f** $(k)$ of the acoustic path from the loudspeaker (2) to the microphone (1)

$$F(q,k) = \mathbf{f}(k)^T \mathbf{q} = \begin{bmatrix} f_0 & f_1 & \cdots & f_{N-1} \end{bmatrix} \begin{bmatrix} q^0 \\ q^{-1} \\ \vdots \\ q^{-N+1} \end{bmatrix}$$

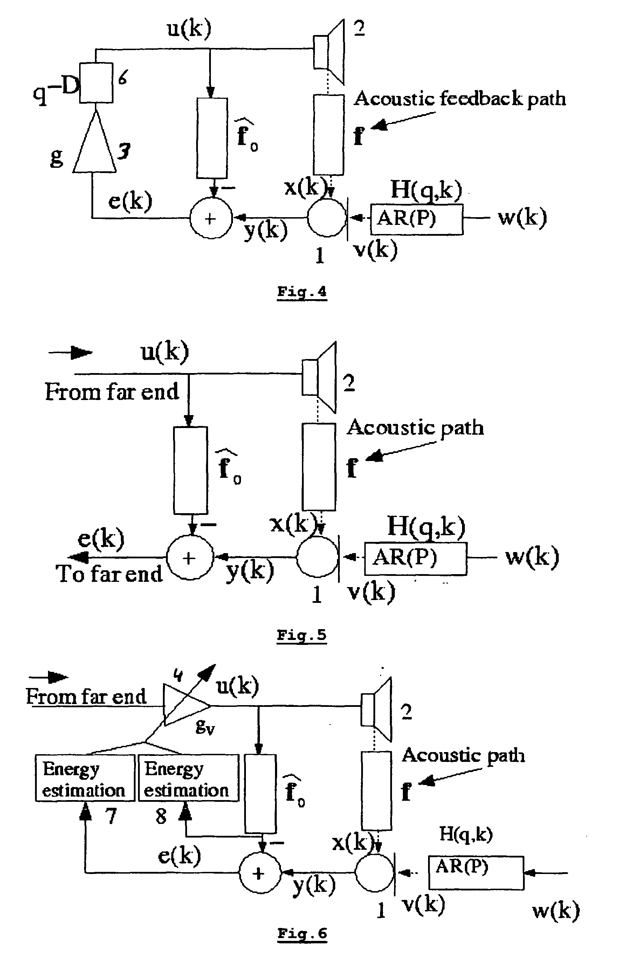

is estimated as $\hat{\mathbf{f}}(k)$ ($\hat{\mathbf{f}}(k)$ is not shown in Figs.4-5). Note that $\mathbf{q}$ is the delay operator. The N coefficients of $\hat{\mathbf{f}}(k)$ are copied at regular time instants to the cancellation filter $\mathbf{f}_0(k)$. The loudspeaker signal $u(k)$ is filtered by the room impulse response $f(k)$ and also by the cancellation filter $\hat{\mathbf{f}}_0(k)$. The difference between the cancellation filter output and the microphone signal y(k) is the error signal $e(k)$ which should then be equal to the near-end signal $v(k)$ (for a correct model $\hat{\mathbf{f}}(k)$). In Fig. 4, Fig. 5 and Fig. 6 w(k) represents the excitation sequence of the near-end source signal, and

$$H(q,k) = \frac{1}{1 + h_1(k)q^{-1} + \ldots + h_P(k)q^{-P}}$$

is a time varying autoregressive (AR) near-end signal model of order P. The coefficient vector of the denominator is h (k). The $q^{-D}$ block (6) in Fig. 4 is a forward delay, which is often unavoidable in digital implementations (buffers for AD/DA-converters, ...). In Fig. 6, the energy of the cancellation filter output is used as an estimate (8) for the energy of x(k), the component of the microphone signal stemming from the loudspeaker, and the energy of e(k) is used as an estimate (7) for the energy of v(k) . In this volume control scheme (Fig. 6) these energy estimates are used to control the amplifier gain $g_v$ (4).

The bias, which arises in the closed-loop setting due to the correlation between the loudspeaker signal and the speech source signal, and the variance on the RIR estimation which occurs in an open-loop system in the presence of noise, can be removed using the prediction error method (PEM). PEM incorporates a speech source signal model (AFC set-up) or a near-end signal model (AEC and AVC set-up) into the identification procedure. The speech source/near-end signal in this system identification set-up is to be considered as a 'noise' signal. The parameters of this 'noise' signal have to be estimated along with the room impulse response. The noise model can then be used to pre-whiten (i.e. to remove the autocorrelation from) the speech source/near-end signal component in both the loudspeaker signal and the microphone signal. A prewhitened near-end component in the microphone signal is not correlated with the loudspeaker signal.

The speech source/near-end signal is modelled as a time varying AR process with either white noise or a periodic signal as its excitation sequence. The near-end signal in an open-loop AEC scheme often also is a speech signal. In case of other statistical processes generating the near-end signal, this model often still is able to provide some amount of pre-whitening.

Speech, although highly non-stationary over longer time periods, often is considered to be stationary during short frames of ca. 20 msec (e.g. 160 samples at 8 kHz). Within these frames, it can be whitened by a cascade of a short-term predictor (STP) and a long-term predictor (LTP). The short-term and the long-term predictors model the filtering operation performed by the vocal tract and the periodic behaviour of the glottal excitation sequence during voiced speech, respectively. The short-term predictor identifies an AR process of order P (e.g. P=10 at 8 kHz). The long-term predictor is an AR process with basically one single nonzero tap at a lag which can vary between 2.5ms and 20ms (e.g. 20 and 160 samples at 8 kHz). On the other hand the room impulse response length for public address applications (unlike for hearing aid applications) can have several thousand of non-zero taps and is mostly stationary over longer periods of time. So it is advantageous to use data windows of several seconds to estimate the room impulse response, over which the speech signal then will be non-stationary. This contrast between the long stationarity period of the long room impulse response and the short stationarity period of the short-term prediction speech model, and the corresponding number of data points which are available to identify each of them, is a fundamental issue when designing circuits for room impulse response estimation.

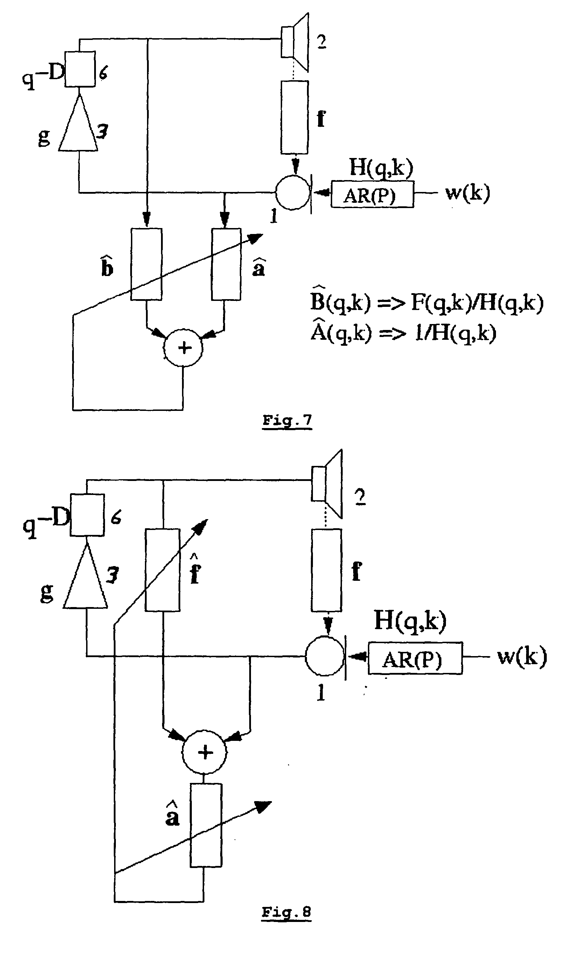

A two-channel AFC algorithm *2ChAFC* (see Fig. 7) has been proposed, which uses the same data window length for the identification of the speech model as for the room impulse response identification. This is justified for short acoustic paths such as in hearing aids. For PA systems, this approach is suboptimal, although it still performs better than direct identification, since it still - provides some degree of pre-whitening.

Another algorithm is described in patent document US-6611600-B, which will be referred to as PEM-AFC (Fig. 8). It effectively distinguishes between the estimation window length for the speech model and for the room impulse response model, but it implicitly assumes stationarity of the speech model, which is not valid for long acoustic impulse responses (e.g. > 20msec) involved in public address applications. It also uses an incomplete speech model (short term prediction only), which provides some whitening, but does not remove the periodicity due to the glottal excitation. This results in the loudspeaker signal still being correlated to the source signal during voiced speech.

Some further technical details are provided while briefly reviewing the above-mentioned 2ChAFC and PEM-AFC algorithms.

In *'Adaptive filtering techniques for noise reduction and acoustic feedback cancellation', A. Spriet, Ph.D. thesis, KULeuven, Belgium, September 2004,* the prediction error method, known from system identification theory, is applied to an AFC problem. Under the assumption of stationarity, it is proved that if in a scheme as in Fig. 7 the forward delay D (6) is larger than the order P of the AR process generating the speech signal, the two-channel MMSE-based adaptive filters $(\hat{A}(q,k), \hat{B}(q,k))$ with filter coefficient vectors $(\hat{a}(k);\hat{b}(k))$ converge to a unique solution $(H^{-1}(q,k),F(q,k)H^{-1}(q,k))$. This allows to introduce a cancellation filter $\hat{f}_0(q,k) = A^{-1}(q,k)B(q,k)$ into the scheme (like in Fig. 4). If this is implemented as an infinite impulse response (IIR) filter, stability monitoring is needed, but it is a trivial modification to perform a deconvolution first, which results in a FIR cancellation filter. The filters b(k) and â(k) are updated concurrently in the two parallel branches, and so the scheme is referred to as two-channel adaptive feedback canceller (2ChAFC). The estimation data window is the same for both branches. The scheme therefore provides good results in hearing aid applications, where the speech signal is stationary over the data window length required to estimate of the acoustic path.

PEM-AFC uses two independently updated adaptive filters with coefficients vectors $\hat{f}(k)$ and $\hat{a}(k)$, as shown in Fig. 8. The estimation of $\hat{f}(k)$ and $\hat{a}(k)$ can be performed over different data window lengths (different RLS forgetting factors). In PEM-AFC, $\hat{a}(k)$ decorrelates the scalar output residuals of the adaptive filter f(k). In a stationary set-up, where the order of both filters is arbitrary, this is equivalent to a pre-whitening operation for the input of the filter $\hat{f}(k)$. Also this scheme performs well in hearing aids, where the speech model does not change over the data window needed to estimate the acoustic impulse response. Again, this assumption does not hold in applications with long acoustic paths. Note that in Fig.7 and Fig.8 only the circuit for impulse response identification is shown. The cancellation filter actually cancelling the feedback signal is not represented. The filter coefficient vector f(k) is copied e.g. at regular time intervals into the cancellation filter's coefficient vector.

## Aims of the invention

The present invention proposes a circuit and method, which allows for estimation (identification) of room impulse responses in the presence of ambient noise, acoustic feedback cancellation in set-ups with long acoustic paths and acoustic echo cancellation in the presence of near-end signals.

## Summary of the invention

The present invention relates to a method for estimating a room impulse response, comprising the steps of

a) applying a far-end signal to a first filter and to a loudspeaker broadcasting said far-end signal in a room,
b) picking up by means of a microphone a signal from the room, said signal comprising the broadcast far-end signal and a near-end signal,
c) applying the difference signal between a version of the far-end signal filtered by the first filter and the signal picked up with the microphone to an adaptive linear prediction filter Â,
d) updating the adaptive linear prediction filter's coefficients **â** taking into account the signal output by the adaptive linear prediction filter.
According to the invention, the method is characterised in that it comprises the steps of:
e) copying the updated coefficients of the adaptive linear prediction filter into a third and a fourth filter,
f) applying the far-end signal to the third filter and calculating the output of the third filter,
g) applying the third filter's output to an adaptive fifth filter,
h) calculating an update of the adaptive fifth filter's filter coefficients $\hat{f}$, taking into account the difference signal between the signal output by the fifth filter and a version of said signal picked up by the microphone, filtered by the fourth filter, said update yielding an estimation of the room impulse response and
i) copying the adaptive fifth filter's updated coefficients into the first filter.

In a preferred embodiment the steps of the method are performed repeatedly. Preferably the far-end signal and the near-end signal are divided in frames, e.g. with a duration of 20 msec. Advantageously the steps of the method are performed more than once per frame.

In a preferred embodiment the filter coefficients update for the adaptive fifth filter is calculated by means of a RLS or NLMS algorithm.

Advantageously the near-end signal is a speech signal.

As a second object the invention relates to a circuit for adaptively estimating a room impulse response with the method as described above, comprising

- a loudspeaker arranged for broadcasting a far-end signal in a room,
- a microphone arranged for picking up a signal from the room, said signal comprising the broadcast far-end signal far-end signal and a near-end signal,
- a first filter having an input for applying the far-end signal,
- first summation means for calculating a first difference signal, said first difference signal representing the difference between the signal picked up by said microphone and a version of the far-end signal, filtered by the first filter,
- an adaptive linear prediction filter arranged for being fed with the first difference signal.

According to the invention, the circuit is characterised in that it comprises:

- a third filter and a fourth filter, both a replica of the linear prediction filter, said third filter having an input for the far-end signal and the fourth filter having an input for the signal picked up by the microphone,
- an adaptive fifth filter having an input for the third filter's output, and
- second summation means for calculating a second difference signal, said second difference signal representing the difference between a signal output by the fifth filter and a version of the signal picked up by the microphone, filtered by the fourth filter.

In an advantageous embodiment the linear prediction filter, the third filter and the fourth filter each are a cascade of a short-term prediction filter and a long-term prediction filter. Typically the circuit further comprising a delay block.

In a further aspect the invention also relates to a circuit for adaptively cancelling an acoustic echo signal comprising a circuit as previously described.

In yet another aspect the invention relates to a circuit for adaptively cancelling an acoustic feedback signal comprising a circuit as described above and an amplifier arranged at its input for being connected to the microphone and at its output for being connected to the loudspeaker. Such an adaptive acoustic feedback cancelling circuit may further comprise a delay block connected between the amplifier and the loudspeaker.

Another aspect of the invention concerns a public address system comprising a circuit for adaptively cancelling an acoustic feedback signal as recited above. It may as well relate to an intercom system comprising a circuit for adaptively cancelling an acoustic echo signal as previously described.

In another object the invention relates to the use of a circuit as recited for automatically adjusting the broadcasting volume of a loudspeaker message.

## Short description of the drawings

Fig. 1 represents a conventional acoustic echo cancellation scheme (i.e. open-loop system).

Fig. 2 represents an automatic volume control scheme (i.e. open-loop system).

Fig. 3 represents a microphone-amplifier-loudspeaker-room system.

Fig. 4 represents an acoustic feedback cancellation scheme (i.e. closed-loop system).

Fig. 5 represents an acoustic echo cancellation scheme with a near-end source model.

Fig. 6 represents an automatic volume control scheme with a near-end source model.

Fig. 7 represents the 2ChAFC scheme.

Fig. 8 represents the PEM-AFC scheme.

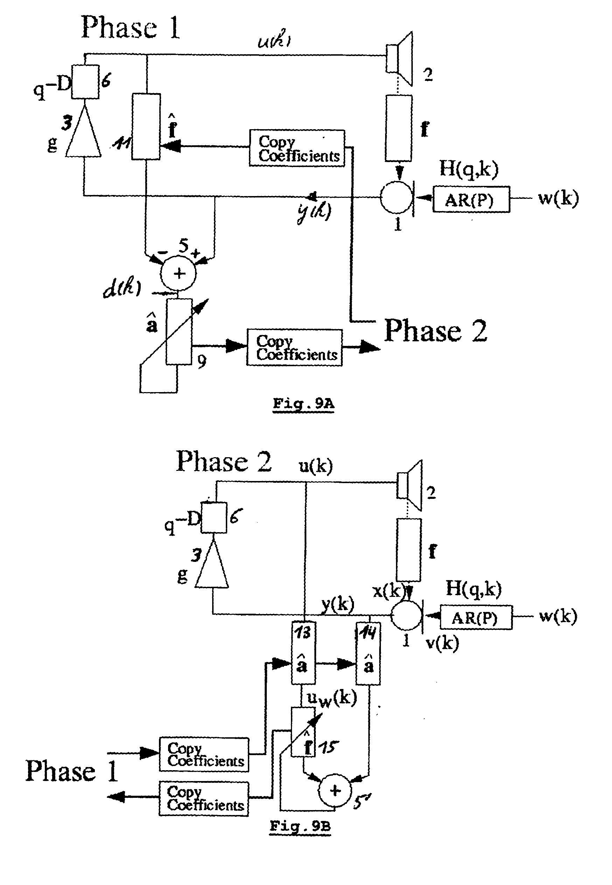

Fig. 9 represents the PEM-AFROW scheme, i.e. the scheme according to the invention. Fig.9A shows the first phase of the method and Fig.9B the second phase.

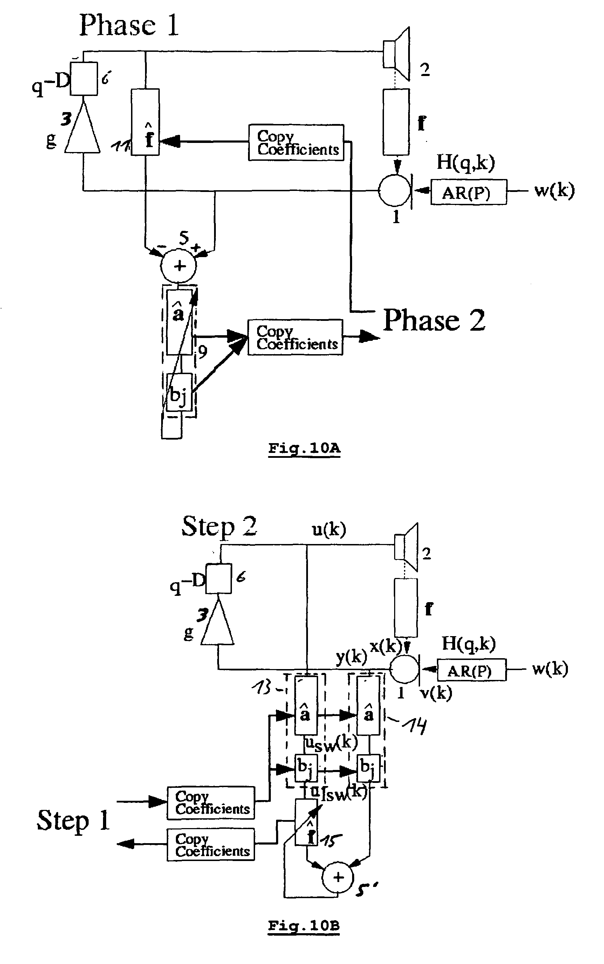

Fig. 10A and Fig.10B represent an embodiment with short-term and long-term prediction filters.

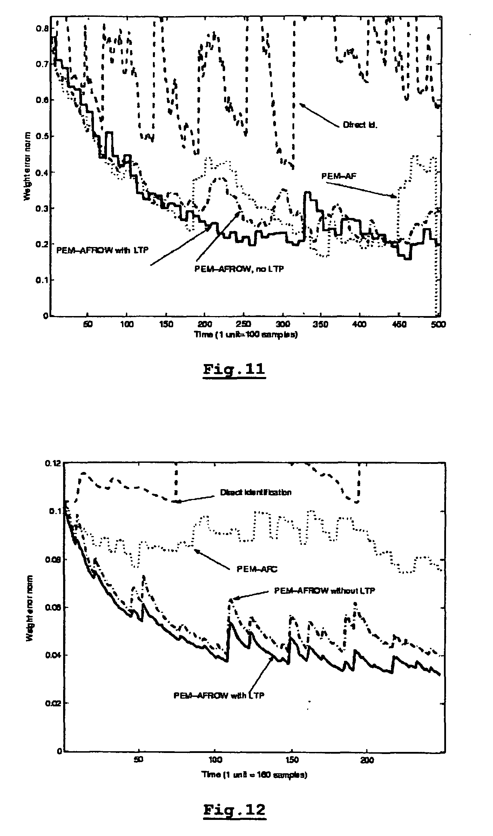

Fig. 11 represents a comparison of PEM-AFC with PEM-AFROW for short paths (50 taps).

Fig. 12 represents PEM-AFROW with and without long-term prediction versus direct identification for long paths (1000 filter taps).

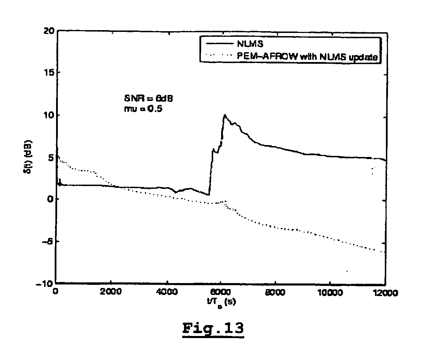

Fig. 13 represents the convergence in an open-loop setting (acoustic echo cancellation with double talk).

## Detailed description of the invention

The present invention discloses a circuit and method, wherein the calculation of the estimates of the speech source/near-end model and of the room response is performed in an alternating fashion. A speech source/near-end model, preferably with both short- and long-term prediction, is used to estimate the speech/near-end signal applied to the microphone. The speech/near-end model is estimated over short time windows (over which it is stationary) and the room impulse model over longer time windows (which is necessary because of the much larger number of parameters). The algorithm is shown to outperform existing methods. The main difference with prior art schemes is twofold. First, there is no assumption on the speech signal stationarity over the length of the data window on which the acoustic path is identified. Second, the present method elegantly incorporates a long-term prediction filter, which removes periodicity in the short-term speech signal residual.

More specifically, in the algorithm disclosed in the invention the speech model provides row transformations, which are then applied to pre-whiten the least squares system from which the room response estimate is computed, hence the name 'prediction error method based adaptive filtering with row operations' (PEM-AFROW). PEM-AFROW performs very well for AFC with long acoustic paths (as opposed to the prior art), while it is even slightly better than the prior art methods for short path applications. Due to the pre-whitening of the speech/near-end signal, the method provides the possibility of continuous adaptation in the presence of near-end signals in an open-loop system, such as acoustic echo cancellation and acoustic room impulse response (RIR) identification. Thanks to the low complexity, the method can easily be implemented in real time.

It is instructive to first assume that *w(k),* the excitation sequence, is a white noise sequence. This means that the speech source/near-end signal is modelled as a Time Varying AR (TVAR) signal of order *P* :

$$v(k) = h_1 v(k-1) + \ldots + h_P v(k-P) + b(k)w(k),$$

where *b(k)* accounts for energy variations in the excitation signal. Further on in this description a more general model for w(k) will be used.

Starting from the minimisation problem:

$$\min_{\hat{\mathbf{f}}} \left\| U(k)\hat{\mathbf{f}}(k) - \mathbf{y}(k) \right\|, \qquad (1)$$

with

$$U(k) = \begin{pmatrix} u(k) & u(k-1) & \cdots & u(k-N+1) \\ u(k-1) & & & \\ \vdots & \vdots & \ddots & \vdots \\ u(0) & 0 & \cdots & 0 \end{pmatrix}.$$

$$\mathbf{y}(k) = \begin{pmatrix} y(k) \\ y(k-1) \\ \vdots \\ y(0) \end{pmatrix}.$$

one obtains a biased estimate $\hat{\mathbf{f}}(k)$ for **f**(k) since *y(k)* contains the 'disturbance' *v(k)* which is correlated with *u(k),* i.e.

$$\mathbf{y}(k) = U(k)\mathbf{f}(k) + \mathbf{v}(k) \qquad (2)$$

Assuming one has the finite impulse response filter

$$A(q,k) = H^{-1}(q,k)$$

available at each time instant, with coefficient vector $\mathbf{a}(k) \in {}^p$, a pre-whitening can be applied by forming the matrix

$$A(k) = \begin{pmatrix} \mathbf{a}^T(k) & 0 & 0 & 0 \\ 0 & \mathbf{a}^T(k-1) & 0 & 0 \\ 0 & 0 & \mathbf{a}^T(k-2) & 0 \\ 0 & 0 & 0 & \ddots \end{pmatrix},$$

and modifying the minimisation problem (1) to

$$\min_{\hat{\mathbf{f}}} \left\| A(k)U(k)\hat{\mathbf{f}}(k) - A(k)\mathbf{y}(k) \right\|. \tag{3}$$

This effectively whitens the component $v(k)$ in $y(k)$, while performing only row operations on the input matrix $U(k)$, i.e. from (2)

$$A(k)y(k) = A(k)U(k)f(k) + b(k)w(k)$$

and thus leading to an unbiased estimate $\hat{f}(k)$.

Having an estimate $\hat{A}(q,k)$ of $H^{-1}(q,k)$ available at each time instant, with coefficients $\hat{a}(k) \in {}^p$, a pre-whitening can be applied by forming the matrix

$$\hat{A}(k) = \begin{pmatrix} \hat{\mathbf{a}}^T(k) & 0 & 0 & 0 \\ 0 & \hat{\mathbf{a}}^T(k-1) & 0 & 0 \\ 0 & 0 & \hat{\mathbf{a}}^T(k-2) & 0 \\ 0 & 0 & 0 & \ddots \end{pmatrix},$$

and modifying the minimisation problem (1) to

$$\min_{\hat{\mathbf{f}}} \left\| \hat{A}(k)U(k)\hat{\mathbf{f}}(k) - \hat{A}(k)\mathbf{y}(k) \right\|. \tag{4}$$

Introducing the assumption of h(k) being constant during frames of 20 ms, one can write

$$\hat{A}(k) = \begin{pmatrix} \hat{\mathbf{a}}_i^T & & 0 & 0 & 0 \\ & \ddots & & & \\ 0 & & \hat{\mathbf{a}}_i^T & 0 & 0 \\ 0 & & 0 & \hat{\mathbf{a}}_{i-1}^T & 0 \\ 0 & & 0 & 0 & \ddots \end{pmatrix} \begin{matrix} \uparrow \\ L \\ \downarrow \\ \uparrow \\ L \\ \downarrow \end{matrix} \quad , \qquad (5)$$

with e.g. $L = 160$ for a sampling rate of 8 kHz and $i$ representing the first integer larger than $k/L$. This means that $i$ is the frame index.

In the solution according to the invention the non-linear equations (4) are decoupled in order to calculate the estimates $\hat{\mathbf{a}}_i$ and the room response $\hat{\mathbf{f}}(k)$ in an alternating fashion.

In a first phase (Fig. 9A), a filter (11) with as coefficient vector a previous estimate $\hat{\mathbf{f}}(k)$ is used to filter a frame of data (e.g. 20 msec). Note that although in Fig.9A the impulse response identification method for an AFC scheme is shown, the full reasoning also holds for an AEC and AVC scheme. The filter output is subtracted (5) from the corresponding microphone samples y(k) (in which k=(i-1)L .. iL-1), resulting in

$$\dot{d}(k) = y(k) - U(k)\hat{\mathbf{f}}(k).$$

Note that if the estimate $\hat{\mathbf{f}}(k)$ were exact, then $d(k)=v(k)$. Linear prediction is then performed on this $d(k)$ (in which k=(i-1)L .. iL-1) (Levinson-Durbin algorithm) to find the linear prediction error filter $\hat{\mathbf{a}}_i$ (9). In a second phase (see Fig. 9B) equation (4) is solved for filter (15) with coefficient vector $\hat{\mathbf{f}}(k)$ with the updated (fixed) value for $\hat{\mathbf{a}}_i$. This gives a better estimate $\hat{\mathbf{f}}(k)$ for the room impulse response $\mathbf{f}(k)$. The updated value for $\hat{\mathbf{a}}_i$ is copied into a filter (13) and into a filter (14). The output of filter (13) (with the updated $\hat{\mathbf{a}}_i$ coefficient vector) to which the samples of the microphone signal are-applied, is calculated. Obviously, before applying the output of filter (13) to filter (15), a recalculation of the input vector to filter (15) is performed to take into account the updated value for $\hat{\mathbf{a}}_i$. Then, having determined the output of filter (15), the minimisation problem (4) can be solved for obtaining an update of $\hat{\mathbf{f}}(k)$. The updated $\hat{\mathbf{f}}$ (k) can then be copied into filter (11) for use in the next iteration.

These two phases can be iterated on the frame. Since none of the two phases increases the expected value of $\|\mathbf{e}(k)\|$

$$\varepsilon\{\|\mathbf{e}(k)\|\} = \varepsilon\{\left\|\hat{A}(k)U(k)\hat{\mathbf{f}}(k) - \hat{A}(k)y(k)\right\|\},$$

the algorithm will converge to a (possibly local) minimum of equation (4).

In order to reduce the complexity, only one iteration per frame could be performed. The minimisation problem (4), with an in the second phase fixed value of $\hat{A}(k)$, can be solved for $\hat{\mathbf{f}}(k)$ by means of any adaptive filtering algorithm. This can e.g. be implemented using a QRD-based RLS algorithm, an NLMS algorithm etc. The input vector (left hand branch) is $\mathbf{u}_w$, a whitened version of $\mathbf{u}$, given by the expression

$$\mathbf{u}_w^T(k) = \mathbf{a}_i^T \begin{pmatrix} \mathbf{u}^T(k) \\ \vdots \\ \mathbf{u}^T(k-P+1) \end{pmatrix}, i = \lceil k/L \rceil, \qquad (6)$$

and the desired signal input (right hand side sample) is $\mathbf{a}_i^T \mathbf{y}(k)$ . Here

$$\mathbf{u}(k) = \begin{bmatrix} u(k) \\ \vdots \\ u(k-N+1) \end{bmatrix}, \quad \mathbf{y}(k) = \begin{bmatrix} y(k) \\ \vdots \\ y(k-P+1) \end{bmatrix}.$$

Since u($k$) is a shifted version of u(k-1) with the last component removed and one component

$$\mathbf{a}'_i \begin{bmatrix} u(k) \\ u(k-1) \\ ... \\ u(k-P+1) \end{bmatrix}$$

prepended, and $\mathbf{a}_i$ remains constant during a frame of $L$ samples, $\mathbf{u}_w(k)$ is a shifted version of $\mathbf{u}_w(k-1)$ with one sample prepended. So inside a frame, only one vector multiplication has to be performed to calculate $u_w(k)$. On the other hand, at the start of each frame, a matrix multiplication should be performed to calculate all elements of $u_w(iL)$ as follows :

$$\mathbf{u}_w^T((i-1)L+1) = \mathbf{a}_i^T \begin{pmatrix} \mathbf{u}^T((i-1)L+1) \\ \vdots \\ \mathbf{u}^T((i-1)L-P+2) \end{pmatrix}.$$

For real time implementation, the scheme involves a delay of one frame for the update of $\hat{\mathbf{f}}(k)$, since $\mathbf{a}_i$ can only be calculated at time $iL$. This is not a problem since the room impulse response was assumed to be constant over more than one frame. The delay is effectively implemented as a delay line for the input samples $u(k)$ before they are fed to equation (6).

Once the room impulse response has been identified, the next step is to insert the cancellation filter into the feedback cancellation scheme, the echo cancellation scheme or the volume control scheme by setting $\hat{\mathbf{f}}_0(k)=\hat{\mathbf{f}}(k)$, e.g. at regular time intervals. Experiments indicate that updating the cancellation filter regularly is beneficial to the identification process in a closed-loop system (AFC setting). This can be explained, as a time variant forward path (from microphone to loudspeaker) decreases the correlation between the loudspeaker signal and the speech source signal.

At this point, the difference between PEM-AFC and PEM-AFROW becomes obvious: in PEM-AFROW the stationarity of the speech signal during only one frame is explicitly assumed in the minimisation problem by stating that $\hat{\mathbf{a}}_i$ remains constant during a frame (see equation (5)). At the start of each frame, the full input vector $\mathbf{u}_w^T(k)$ is recalculated. In PEM-AFC, this assumption of stationarity is not made for the optimisation problem itself (the optimisation is decoupled in two completely independent adaptive filters), and the full input vector is never recomputed after a change of $\mathbf{a}(k)$ in PEM-AFC. In PEM-AFC it is quietly assumed that the near-end signal remains stationary during the length of the impulse response identification window. This explains the better performance of PEM-AFROW.

For the time varying AR signals in the previous example with $w(k)$ a white noise sequence, the pre-whitening step removes all of the correlation between the loudspeaker signal and the source signal. However, the excitation sequence $w(k)$ for voiced speech is periodical (glottal excitation). Due to this periodicity the input signal $u(k)$ to the adaptive filter is still correlated with the source signal, even after pre-whitening. This in practice leads to a severely biased estimate of the room impulse response, the bias being localised at the excitation harmonics.

A possible solution could be to increase the length (the span) of the prediction filter $a(k)$ so that it becomes longer than the period of the excitation sequence. It would then combine the periodicity together with the AR-coefficients for the vocal tract model. The problem here is that the pitch period can be as long as 20msec (e.g. 160 samples at 8kHz), so not enough data is then available in a 20msec window (e.g. 160 samples at 8kHz) window to estimate the (e.g. 160+$P$-1 at 8kHz) prediction filter coefficients. An alternative approach is to implement filter (9) (and thus also its copies, filter (13) and (14)) as a cascade (see Fig.10) of a short-term predictor (STP) of order P (e.g. P=12), which models the vocal tract characteristics,

$$\mathbf{u}_{sw}^T(k) = \mathbf{a}_i^T \begin{pmatrix} \mathbf{u}^T(k) \\ \vdots \\ \mathbf{u}^T(k-P+1) \end{pmatrix}, i = \lceil k/L \rceil, \quad (7)$$

with a long-term predictor (LTP) $b_j$ with only one tap and a lag $M_j$ equal to the pitch period to model the periodicity,

$$\begin{aligned} u_{lsw}(k) &= u_{sw}(k) + b_j u_{sw}(k - M_j), \\ j &= \lceil k/L_{ltp} \rceil. \end{aligned}$$

Variables $u_{sw}$ and $u_{lsw}$ denote the short-term filter output and long-term filter output, respectively (Fig.10). The LTP can be estimated in windows of 20 msec (which is the frame length $L$ of the short-term predictor), with a 10 msec overlap. This means that the LTP model is estimated each 10 msec, corresponding to $L_{ltp}$ samples (e.g. at 8 kHz, $L_{ltp}$ = 80). In order to estimate the LTP, the following expression is minimised

$$\begin{aligned} E_j &= \min \varepsilon\{\|u_{lsw}(k)\|^2\} \\ &= \min \varepsilon\{\|u_{sw}(k - M_j)b_j + u_{sw}(k)\|^2\} \end{aligned}$$

The solution follows from

$$\begin{aligned} \varepsilon\{u_{sw}(k - M_j)u_{sw}(k - M_j)\}.b_j &= \\ \varepsilon\{u_{sw}(k)u_{sw}(k - M_j)\}, \end{aligned}$$

In order to estimate these values, one defines

$$\overline{\mathbf{u}}_{sw}(k) = \begin{pmatrix} u_{sw}(k) \\ u_{sw}(k-1) \\ \vdots \\ u_{sw}(k-L+1) \end{pmatrix}.$$

One can then estimate

$$b_j = (\overline{\mathbf{u}}_{sw}^T(k - M_j)\overline{\mathbf{u}}_{sw}(k - M_j))^{-1}\overline{\mathbf{u}}_{sw}^T(k)\overline{\mathbf{u}}_{sw}(k - M_j)$$

The variance of the long-term prediction residual is

$$E_j = \overline{\mathbf{u}}_{sw}^T(k)\overline{\mathbf{u}}_{sw}(k) - \frac{(\overline{\mathbf{u}}_{sw}^T(k)\overline{\mathbf{u}}_{sw}(k - M_j))^2}{\overline{\mathbf{u}}_{sw}^T(k - M_j)\overline{\mathbf{u}}_{sw}(k - M_j)}$$

This is evaluated for different values of $M_{j,i} = M_{min}, ... M_{max}$ (the lag) and the parameters ($M_j$, $b_j$) which result in the minimum value of $E_j$ are chosen as the predictor for long-term prediction frame j.

By applying long-term prediction, the actual order of the speech source model is the lag of the long-term model plus the order of the short-term model. To guarantee identifiability, a forward delay larger than the order of this model is required. In practice it does not matter too much where the forward delay is implemented: often a latency D is introduced by buffering after and before the A/D and D/A-converters, or even due to the relatively low velocity of sound waves from the distance between the loudspeaker and the microphone. As described previously, at frame borders the whole input vector has to be recalculated by means of a matrix multiplication. When long-term prediction is added to the algorithm, this matrix multiplication has to be performed not only at frame borders of the short-term predictor, but also at frame borders of the long-term predictor. Note that in the algorithm multiple tap long-term prediction may be used instead of single tap long-term prediction. In order to apply row updates, the input vector of the adaptive filter $U_{lsw}$ (see Fig.10), which consists of the residual signal of the cascade of the short-term and long-term predictor filters, and the vector on which this is based, namely $\mathbf{u}_{sw}$, have to be recalculated when the short-term predictor changes (which happens at each frame border). Also when the whole vector $\mathbf{u}_{sw}$ has been recalculated $M_j$ samples ago ($M_j$ being the lag of the long-term predictor), $U_{1sw}$ has to be recomputed. At all other time instants $\mathbf{u}_{sw}$ and $U_{1sw}$ are shifted versions of the previous $\mathbf{u}_{sw}$ and $U_{1sw}$, with only one new element in front. If the long-term prediction data windows overlap, the vector $U_{lsw}$ also has to be recomputed whenever the long-term predictor changes.

Now some performance figures are discussed. First the PEM-AFROW approach is compared to the decoupled PEM-AFC approach for short paths (Fig. 11), as they occur in e.g. hearing aids. In the figure the weight error norm

$$\left\| \mathbf{f}(k) - \hat{\mathbf{f}}(k) \right\|$$

is plotted as a function of time. Note that only the identification performance is shown, which means that the cancellation filter is not inserted into the scheme during adaptation. The signal is a sentence uttered by a male voice, the acoustic path has 50 taps. NLMS is used for both approaches, since in a practical implementation this would be the adaptive algorithm of choice (due to complexity constraints). The NLMS step size is 0.01 for PEM-AFROW, while PEM-AFC, which uses a modified NLMS algorithm and thus a different definition of the step size, was tuned to give an equal initial convergence speed. This allows a fair comparison of the resulting bias/variance of the solution. The performance of all algorithms depends on the energy ratio (S/N ratio) of the loudspeaker component arriving on the microphone versus the source signal arriving on the microphone (the source signal should thus be interpreted as 'noise'). The shown simulations are performed for one specific situation where this ratio was -11 dB, but experiments show a similar performance difference between the algorithms for other ratios. The short time prediction frame length is 160 samples. The long-term prediction frame overlap is 80 samples. The minimum and maximum lags for the long-term predictor are 20 and 160 respectively. The sampling frequency is 8 kHz. The speech model order in PEM-AFROW and PEM-AFC is 12. The forward delay is 200 taps in both PEM-AFROW and PEM-AFC (note that the PEM-AFC version of US-6611600-B does not explicitly incorporate a forward delay, but a theoretical analysis shows that this is required for correct performance). Also the performance of PEM-AFROW with the long-term predictor disabled is shown, because PEM-AFC does not use a long-term predictor. PEM-AFC and PEM-AFROW without LTP are found to be comparable, which is to be expected since the stationarity assumption of the speech model during the data window for acoustic path identification is fulfilled. PEM-AFROW with LTP performs slightly better. For longer paths as applicable in PA applications, PEM-AFC performance decreases with path length, and for e.g. $N=1000$, its behaviour is only slightly better than direct identification behaviour (i.e. when the room impulse response is identified as if the system were operating in open-loop), as shown in Fig. 12. Also here the shown convergence curve of PEM-AFC was tuned to have equal initial convergence to PEM-AFROW. PEM-AFROW on the other hand, does perform well also for long paths. The poor performance of PEM-AFC is to be attributed to the stationary speech model assumption, which is not fulfilled for long paths.

In Fig. 13, the performance of PEM-AFROW-based identification in an open-loop setting is compared to a standard normalised least mean squares (NLMS) algorithm, which is traditionally used for this type of acoustic echo cancelling problems. Fig. 13 shows the convergence plots for the standard NLMS algorithm and the PEM-AFROW algorithm with NLMS update. The step size was set to $\mu=0.5$ for both algorithms and the average SNR at the microphone was equal to 6dB. The PEM-AFROW algorithm shows a smooth convergence, whereas the NLMS algorithm diverges around a timestep=5500 and does not converge properly afterwards. The divergence occurs at a time instant where the loudspeaker signal has low energy and the near-end signal shows a sudden energy increase. The PEM-AFROW algorithm with NLMS update shows a more robust performance in this situation.

Another use of an open-loop identification scheme like AEC comprising the solution of the present invention is the application in which a loudspeaker message is broadcasted in a noisy environment and one wants to automatically adjust the broadcasting volume to the ambient noise level. Acoustic impulse response identification can then be applied with the purpose of separating the measurement microphone signal into two components, an ambient noise component and a component originating from the loudspeaker. These separate components can then be used to measure both the loudspeaker signal level arriving at the microphone and the ambient noise level at the microphone. An example application is a crowded train station in which the acoustic impulse response from a public address loudspeaker to a measurement microphone on the platform is to be identified. The sound levels of the separated components can then be used to calculate a gain factor for the public address system, such that the sound level on the platform is always e.g. 6 dB louder than the ambient noise. The present invention allows for recursive identification of the room impulse response, yet behaves in a robust way in near-end noise situations.

Another advantage of the present invention is that it allows adaptation during double talk or presence of ambient noise, whereas conventional AEC systems use a double talk detector and switch off adaptation during double talk.

As a further advantage of the present invention, in AFC-applications not only the howling phenomenon is suppressed, but also the reverberation-like sounds, which indeed become audible in the region of marginal stability.

**Claims**

1. Method for estimating a room impulse response, comprising the steps of :

   a) applying a far-end signal to a first filter (11) and to a loudspeaker (2) broadcasting said far-end signal in a room,
   b) picking up by means of a microphone (1) a signal from said room, said signal comprising said broadcast far-end signal and a near-end signal,
   c) applying the difference signal between a version of said far-end signal filtered by said first filter (11) and said signal picked up with said microphone (1) to an adaptive linear prediction filter (9),
   d) updating said adaptive linear prediction filter's coefficients $\hat{a}$ taking into account the signal output by said adaptive linear prediction filter (9), **characterised in that** the method comprises the steps of:
   e) copying said updated coefficients of said adaptive linear prediction filter (9) into a third (13) and a fourth (14) filter,
   f) applying said far-end signal to said third filter (13) and calculating the output of said third filter (13),
   g) applying said third filter's output to an adaptive fifth filter (15),
   h) calculating an update of said adaptive fifth filter's filter coefficients $\hat{f}$, taking into account the difference signal between the signal output by said fifth filter (15) and a version of said signal picked up by said microphone (1), filtered by said fourth filter (14), said update yielding an updated estimation of said room impulse response and
   i) copying said adaptive fifth filter's updated coefficients into said first filter (11).

2. Method as in claim 1, wherein the steps of the method are performed repeatedly.

3. Method as in claim 1 or 2, wherein said far-end signal and said near-end signal are divided in frames.

4. Method as in claim 3, wherein said frames have a duration of 20 msec.

5. Method as in claim 3 or 4, wherein the steps of claim 1 are performed more than once per frame.

6. Method as in claim 1 or 2, wherein said filter coefficients update for said adaptive fifth filter (15) is calculated by means of a RLS or NLMS algorithm.

7. Method as in any of the previous claims, wherein said near-end signal is a speech signal.

8. Circuit for adaptively estimating a room impulse response with the method as in any of claims 1 to 7, comprising

   - a loudspeaker (2) arranged for broadcasting a far-end signal in a room,
   - a microphone (1), arranged for picking up a signal from said room, said signal comprising said broadcast far-end signal far-end signal and a near-end signal,
- a first filter (11) having an input for applying said far-end signal,
- first summation means (5) for calculating a first difference signal, said first difference signal representing the difference between said signal picked up by said microphone (1) and a version of said far-end signal, filtered by said first filter (11),
- an adaptive linear prediction filter (9) arranged for being fed with said first difference signal,
**characterised in that** the circuit comprises:

- a third filter (13) and a fourth filter (14), both a replica of said linear prediction filter, said third filter (13) having an input for said far-end signal and said fourth filter (14) having an input for said signal picked up by said microphone (1),
- an adaptive fifth filter (15) having an input for said third filter's output, and
- second summation means (5') for calculating a second difference signal, said second difference signal representing the difference between a signal output by said fifth filter (15) and a version of said signal picked up by said microphone, filtered by said fourth filter (14).

9. Circuit for adaptively estimating a room impulse response as in claim 8, wherein said linear prediction filter (9), said third filter (13) and said fourth filter (14) each are a cascade of a short-term prediction filter and a long-term prediction filter.

10. Circuit for adaptively estimating a room impulse response as in claim 8 or 9, further comprising a delay block (6).

11. A circuit for adaptively cancelling an acoustic echo signal comprising the circuit of claim 8, 9 or 10.

12. A circuit for adaptively cancelling an acoustic feedback signal comprising the circuit as in any one claim 8 to 10 and an amplifier arranged at its input for being connected to said microphone and at its output for being connected to said loudspeaker.

13. Circuit of claim 12, further comprising a delay block connected between said amplifier and said loudspeaker.

14. A public address system comprising the circuit for adaptively cancelling an acoustic feedback signal of claim 13.

15. An intercom system comprising the circuit for adaptively cancelling an acoustic echo signal of claim 11.

16. Use of a circuit as in any one claim 8 to 10 for automatically adjusting the broadcasting volume of a loudspeaker message.

**Patentansprüche**

1. Verfahren zum Schätzen einer Impulsantwort eines Raumes, umfassend folgende Schritte:

a) Anlegen eines Fernsignals an ein erstes Filter (11) und an einen Lautsprecher (2), der das Fernsignal in einem Raum aussendet,
b) Aufnehmen mittels eines Mikrofons (1) eines Signals aus dem Raum, wobei das Signal das ausgesendete Fernsignal und ein Nahsignal umfasst,
c) Anlegen des Differenzsignals zwischen einer Version des Fernsignals, die von dem ersten Filter (11) gefiltert wird, und dem Signal, das von dem Mikrofon (1) aufgenommen wird, an ein adaptives Filter mit linearer Prädiktion (9),
d) Aktualisieren der Koeffizienten $\hat{a}$ des adaptiven Filters mit linearer Prädiktion unter Berücksichtigung des Signals, das von dem adaptiven Filter mit linearer Prädiktion (9) ausgegeben wird,
**dadurch gekennzeichnet, dass** das Verfahren folgende Schritte umfasst:
e) Kopieren der aktualisierten Koeffizienten des adaptiven Filters mit linearer Prädiktion (9) in ein drittes (13) und ein viertes (14) Filter,
f) Anlegen des Fernsignals an das dritte Filter (13) und Berechnen der Ausgabe des dritten Filters (13),
g) Anlegen der Ausgabe des dritten Filters an ein fünftes adaptives Filter (15),
h) Berechnen einer Aktualisierung der Filterkoeffizienten $\hat{f}$ des fünften adaptiven Filters unter Berücksichtigung des Differenzsignals zwischen dem Signal, das von dem fünften Filter (15) ausgegeben wird, und einer von dem Mikrofon (1) aufgenommenen Version des Signals, die von dem vierten Filter (14) gefiltert wird, wobei die Aktualisierung eine aktualisierte Schätzung der Impulsantwort des Raumes ergibt, und
i) Kopieren der aktualisierten Koeffizienten des fünften adaptiven Filters in das erste Filter (11).

2. Verfahren nach Anspruch 1, wobei die Schritte des Verfahrens wiederholt ausgeführt werden.

3. Verfahren nach Anspruch 1 oder 2, wobei das Fernsignal und das Nahsignal in Rahmen unterteilt sind.

4. Verfahren nach Anspruch 3, wobei die Rahmen eine Dauer von 20 ms aufweisen.

5. Verfahren nach Anspruch 3 oder 4, wobei die Schritte aus Anspruch 1 pro Rahmen mehr als einmal ausgeführt werden.

6. Verfahren nach Anspruch 1 oder 2, wobei die Aktualisierung der Filterkoeffizienten für das fünfte adaptive Filter (15) mittels eines RLS- oder NLMS-Algorithmus berechnet wird.

7. Verfahren nach einem der vorhergehenden Ansprüche, wobei das Nahsignal ein Sprachsignal ist.

8. Schaltung zum adaptiven Schätzen einer Impulsantwort eines Raumes durch das Verfahren nach einem der Ansprüche 1 bis 7, umfassend

   - einen Lautsprecher (2), der angeordnet ist, um ein Fernsignal in einem Raum auszusenden,
   - ein Mikrofon (1), das angeordnet ist, um ein Signal aus dem Raum aufzunehmen, wobei das Signal das ausgesendete Fernsignal und ein Nahsignal umfasst,
   - ein erstes Filter (11), das einen Eingang zum Anlegen des Fernsignals aufweist,
   - erste Summierungsmittel (5) zum Berechnen eines ersten Differenzsignals, wobei das erste Differenzsignal den Unterschied zwischen dem von dem Mikrofon (1) aufgenommenen Signal und einer Version des Fernsignals, die von dem ersten Filter (11) gefiltert wird, darstellt,
   - ein adaptives Filter mit linearer Prädiktion (9), das angeordnet ist, um mit dem ersten Differenzsignal versorgt zu werden,
   **dadurch gekennzeichnet, dass** die Schaltung Folgendes umfasst:

   - ein drittes Filter (13) und ein viertes Filter (14), die beide Nachbildungen des Filters mit linearer Prädiktion sind, wobei das dritte Filter (13) einen Eingang für das Fernsignal aufweist und das vierte Filter (14) einen Eingang für das von dem Mikrofon (1) aufgenommene Signal aufweist,
   - ein fünftes adaptives Filter (15), das einen Eingang für die Ausgabe des dritten Filters aufweist, und
   - zweite Summierungsmittel (5') zum Berechnen eines zweiten Differenzsignals, wobei das zweite Differenzsignal den Unterschied zwischen einem Signal, das von dem fünften Filter (15) ausgegeben wird, und einer Version des von dem Mikrofon aufgenommenen Signals, die von dem vierten Filter (14) gefiltert wird, darstellt.

9. Schaltung zum adaptiven Schätzen einer Impulsantwort eines Raumes nach Anspruch 8, wobei das Filter mit linearer Prädiktion (9), das dritte Filter (13) und das vierte Filter (14) jeweils eine Kaskade aus einem kurzfristigen Prädiktionsfilters und einem langfristigen Prädiktionsfilter sind.

10. Schaltung zum adaptiven Schätzen einer Impulsantwort eines Raumes nach Anspruch 8 oder 9, ferner umfassend einen Verzögerungsblock (6).

11. Schaltung zum adaptiven Unterdrücken eines akustischen Echosignals, umfassend die Schaltung nach Anspruch 8, 9 oder 10.

12. Schaltung zum adaptiven Unterdrücken eines akustischen Rückführsignals, umfassend die Schaltung nach einem der Ansprüche 8 bis 10 und einen Verstärker, der an seinem Eingang angeordnet ist, um an das Mikrofon angeschlossen zu werden, und an seinem Ausgang angeordnet ist, um an den Lautsprecher angeschlossen zu werden.

13. Schaltung nach Anspruch 12, ferner umfassend einen Verzögerungsblock, der zwischen dem Verstärker und dem Lautsprecher angeschlossen ist.

**14.** Beschallungsanlage, umfassend die Schaltung zum adaptiven Unterdrücken eines akustischen Rückführsignals nach Anspruch 13.

**15.** Gegensprechanlage, umfassend die Schaltung zum adaptiven Unterdrücken eines akustischen Echosignals nach Anspruch 11.

**16.** Verwendung einer Schaltung nach einem der Ansprüche 8 bis 10 zum automatischen Einstellen der Sendelautstärke einer Lautsprechermeldung.

**Revendications**

**1.** Procédé d'estimation d'une réponse impulsionnelle d'une pièce, comprenant les étapes consistant à :

a) appliquer un signal distant à un premier filtre (11) et à un haut-parleur (2) diffusant ledit signal distant dans une pièce,
b) capter au moyen d'un microphone (1) un signal provenant de ladite pièce, ledit signal comprenant ledit signal distant diffusé et un signal proche,
c) appliquer le signal de différence entre une version dudit signal distant filtrée par ledit premier filtre (11) et ledit signal capté par ledit microphone (1) à un filtre adaptatif à prédiction linéaire (9),
d) mettre à jour les coefficients â dudit filtre adaptatif à prédiction linéaire en prenant en compte le signal à la sortie dudit filtre adaptatif à prédiction linéaire (9), **caractérisé en ce que** le procédé comprend les étapes consistant à :
e) copier lesdits coefficients mis à jour dudit filtre adaptatif à prédiction linéaire (9) dans un troisième (13) et un quatrième (14) filtre,
f) appliquer ledit signal distant audit troisième filtre (13) et calculer la sortie dudit troisième filtre (13),
g) appliquer la sortie dudit troisième filtre à un cinquième filtre adaptatif (15),
h) calculer une mise à jour des coefficients $\tilde{f}$ de filtrage dudit cinquième filtre adaptatif en prenant en compte le signal de différence entre le signal à la sortie dudit cinquième filtre (15) et une version dudit signal capté par ledit microphone (1), filtrée par ledit quatrième filtre (14), ladite mise à jour produisant une estimation mise à jour de ladite réponse impulsionnelle de la pièce, et
i) copier les coefficients mis à jour dudit cinquième filtre adaptatif dans ledit premier filtre (11).

**2.** Procédé selon la revendication 1, dans lequel les étapes du procédé sont effectuées de façon répétée.

**3.** Procédé selon la revendication 1 ou 2, dans lequel ledit signal distant et ledit signal proche sont divisés en trames.

**4.** Procédé selon la revendication 3, dans lequel lesdites trames ont une durée de 20 ms.

**5.** Procédé selon la revendication 3 ou 4, dans lequel les étapes de la revendication 1 sont effectuées plus d'une fois par trame.

**6.** Procédé selon la revendication 1 ou 2, dans lequel la mise à jours desdits coefficients de filtrage pour ledit cinquième filtre adaptatif (15) est calculée au moyen d'un algorithme RLS ou NLMS.

**7.** Procédé selon l'une quelconque des revendications précédentes, dans lequel ledit signal proche est un signal vocal.

**8.** Circuit pour estimer de façon adaptative une réponse impulsionnelle d'une pièce par le procédé selon l'une quelconque des revendications 1 à 7, comprenant

- un haut-parleur (2) agencé pour diffuser un signal distant dans une pièce,
- un microphone (1) agencé pour capter un signal provenant de ladite pièce, ledit signal comprenant ledit signal distant diffusé et un signal proche,
- un premier filtre (11) ayant une entrée pour appliquer ledit signal distant,
- des premiers moyens de sommation (5) pour calculer un premier signal de différence, ledit premier signal de différence représentant la différence entre ledit signal capté par ledit microphone (1) et une version dudit signal distant, filtré par ledit premier filtre (11),
- un filtre adaptatif à prédiction linéaire (9) agencé pour être alimenté par ledit premier signal de différence,

**caractérisé en ce que** le circuit comprend :

- un troisième filtre (13) et un quatrième filtre (14), les deux étant des répliques dudit filtre à prédiction linéaire, ledit troisième filtre (13) ayant une entrée pour ledit signal distant et ledit quatrième filtre (14) ayant une entrée pour ledit signal capté par ledit microphone (1),
- un cinquième filtre adaptatif (15) ayant une entrée pour la sortie dudit troisième filtre, et
- des deuxièmes moyens de sommation (5') pour calculer un deuxième signal de différence, ledit deuxième signal de différence représentant la différence entre un signal à la sortie dudit cinquième filtre (15) et une version dudit signal capté par ledit microphone, filtrée par ledit quatrième filtre (14).

9. Circuit pour estimer de façon adaptative une réponse impulsionnelle d'une pièce selon la revendication 8, dans lequel ledit filtre à prédiction linéaire (9), ledit troisième filtre (13) et ledit quatrième filtre (14) sont chacun une cascade d'un filtre à prédiction à court terme et d'un filtre à prédiction à long terme.

10. Circuit pour estimer de façon adaptative une réponse impulsionnelle d'une pièce selon la revendication 8 ou 9, comprenant en outre un bloc de retard (6).

11. Circuit pour supprimer de façon adaptative un signal d'écho acoustique, comprenant le circuit selon la revendication 8, 9 ou 10.

12. Circuit pour supprimer de façon adaptative un signal de retour acoustique, comprenant le circuit selon l'une quelconque des revendications 8 à 10 et un amplificateur agencé à son entrée pour être connecté audit microphone et à sa sortie pour être connecté audit haut-parleur.

13. Circuit selon la revendication 12, comprenant en outre un bloc de retard connecté entre ledit amplificateur et ledit haut-parleur.

14. Système de sonorisation comprenant le circuit pour supprimer de façon adaptative un signal de retour acoustique selon la revendication 13.

15. Système d'intercommunication comprenant le circuit pour supprimer de façon adaptative un signal d'écho acoustique selon la revendication 11.

16. Utilisation d'un circuit selon l'une quelconque des revendications 8 à 10 pour ajuster automatiquement le volume de diffusion d'un message de haut-parleur.

**Fig.1**

**Fig.2**

**Fig.3**

$u(k)$

$q^{-D}$ 6

$g$ 3

$e(k)$

$\widehat{f}_0$

2

Acoustic feedback path

$\mathbf{f}$

$x(k)$

$H(q,k)$

AR(P)

$w(k)$

$y(k)$

$v(k)$

1

**Fig. 4**

$u(k)$

From far end

2

$\widehat{f}_0$

Acoustic path

$\mathbf{f}$

$e(k)$

To far end

$x(k)$

$H(q,k)$

AR(P)

$w(k)$

$y(k)$

$v(k)$

1

**Fig. 5**

From far end

4

$u(k)$

$g_v$

2

Acoustic path

$\mathbf{f}$

Energy estimation

Energy estimation

$\widehat{f}_0$

7 8

$e(k)$

$x(k)$

$H(q,k)$

AR(P)

$y(k)$

$v(k)$

$w(k)$

1

**Fig. 6**

18

$q-D$  6

$g$  3

2

$q-D$  6

f

$$\frac{H(q,k)}{AR(P)}$$  — w(k)

$\widehat{b}$

$\widehat{a}$

$\widehat{B}(q,k) => F(q,k)/H(q,k)$
$\widehat{A}(q,k) => 1/H(q,k)$

+

**Fig.7**

$q-D$  6

$g$  3

$\widehat{f}$

2

f

$$\frac{H(q,k)}{AR(P)}$$  — w(k)

+

$\widehat{a}$

**Fig.8**

Fig.9A

Fig.9B

Fig.10A

Fig.10B

**Fig.11**

**Fig.12**

**Fig.13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6611600 B